# DEMANDE DE BREVET EUROPEEN

(11) **EP 2 091 017 A1**
(43) Date de publication de la demande: **19.08.2009**
(21) Numéro de dépôt: 09151994.2
(22) Date de dépôt: 03.02.2009
(51) Int. Cl.: G06Q 30/00

(54) **Procédé de traçabilité d'un terminal de paiement électronique, en cas de vol de ce dernier, programme d'ordinateur et terminal correspondants**

(30) Priorité: 12.02.2008 FR 0850887
(71) Demandeur: Compagnie Industrielle et Financiere d'Ingenierie "Ingenico", 92200 Neuilly sur Seine (FR)
(72) Inventeur: Naccache, David, 75018, Paris (FR)
(74) Mandataire: Bioret, Ludovic

(57) **Abrégé**

L'invention concerne un procédé de traçabilité d'un terminal de paiement électronique, en cas de vol de ce dernier, comprenant les étapes suivantes :
- détection d'une absence de contact avec une base et/ou un autre terminal associé audit terminal, pendant un laps de temps prédéterminé, générant un passage dudit terminal dans un état volé ;
- dans ledit état volé, stockage dans une zone de mémoire sécurisée du terminal d'une série de données de localisation successives, associées chacune à une information d'horodatage, de façon à permettre une reconstruction d'un itinéraire suivi par ledit terminal.

## Description

### 1. Domaine de l'invention

Le domaine de l'invention est celui des terminaux de paiement électroniques, et plus précisément des terminaux de paiement portables, ou mobiles.

Plus particulièrement, l'invention concerne la lutte contre le vol et le recel de tels terminaux.

On peut trouver des terminaux de paiement électroniques déployés en groupe, ou formant une "communauté", dans des commerces, des supermarchés, des restaurants, etc.

Dans certains cas, ces terminaux sont fixes, c'est-à-dire par exemple reliés à une base, et donc difficiles à voler.

Cependant, pour des raisons de facilité d'utilisation, des terminaux mobiles ou portables sont fréquemment déployés, par exemple dans des restaurants pour éviter au client de se déplacer au moment de son paiement par carte bancaire. Leur faible taille et leur autonomie rendent difficile leur surveillance (par des moyens humains par exemple, ou des moyens de vidéo surveillance).

Un inconvénient de ces terminaux mobiles est qu'ils sont ainsi fortement exposés au vol.

### 2. Art antérieur

En cas de vol, le propriétaire du terminal fait une déclaration aux services de police compétents.

Le terminal peut ensuite être retrouvé par la police, plus ou moins longtemps après le vol. Cependant, l'éloignement du lieu du délit et des conditions particulières, comme l'altération des numéros de série, peuvent rendre difficile pour les services de police la corrélation entre un vol et l'appareil retrouvé. Par exemple, un terminal peut être retrouvé à plusieurs milliers de kilomètres du lieu du vol, plusieurs mois après celui-ci.

De ce fait, les services de police sont souvent dans l'impossibilité de le restituer à son propriétaire légal.

### 3. Objectifs de l'invention

L'invention a notamment pour objectif de pallier cet inconvénient de l'art antérieur.

Plus précisément, un objectif de l'invention, selon au moins un mode de réalisation, est d'aider les enquêteurs à mieux caractériser un vol de terminal de paiement.

En particulier, un objectif de l'invention est d'aider les enquêteurs à retrouver le propriétaire d'un terminal mobile dérobé.

Un autre objectif de l'invention est d'aider les enquêteurs à confondre les malfaiteurs.

Encore un objectif de l'invention est de fournir une telle technique qui soit simple à mettre en oeuvre et peu coûteuse dans certains modes de réalisation.

### 4. Exposé de l'invention

L'invention propose une solution nouvelle qui ne présente pas les limitations des solutions de l'art antérieur, sous la forme d'un procédé de traçabilité d'un terminal de paiement électronique, en cas de vol de ce dernier, comprenant les étapes suivantes :
- détection d'une absence de contact avec une base et/ou un autre terminal associé audit terminal, pendant un laps de temps prédéterminé, générant un passage dudit terminal dans un état volé ;
- dans ledit état volé, stockage dans une zone de mémoire sécurisée du terminal d'une série de données de localisation successives, associées chacune à une information d'horodatage, de façon à permettre une reconstruction d'un itinéraire suivi par ledit terminal.

L'étape de détection du vol tient donc compte par exemple d'une impossibilité pour le terminal d'entrer en contact avec sa base ou avec au moins un autre terminal du même parc pendant un laps de temps prédéterminé.

Dans ce cas, il décide, de lui-même, de stocker de façon sécurisée des informations qui pourront être utilisées plus tard, notamment par des services de police, pour connaître, au moins de façon indicative, le trajet suivi par le terminal, et donc le voleur.

En d'autres termes, on mémorise, par exemple à des fins d'enquête, un historique du terminal depuis l'instant où le vol a été détecté.

Ainsi, le procédé prévoit en particulier, dans ledit état volé, une étape de stockage d'une série de données de localisation successives, associées chacune à une information d'horodatage.

En effet, lorsque le terminal sera retrouvé, les services de police, ou plus généralement tout tiers autorisé, pourront reconstruire le parcours suivi, en fonction des informations de localisation (par exemple des identifiants des cellules d'un réseau GSM), dans le temps (par exemple en mémorisant les instants de changement de cellules GSM, ou « handover »). Ces informations, et le cas échéant d'autres informations relatives à des circonstances du vol, peuvent permettre de retrouver plus aisément le propriétaire légitime du terminal, et/ou confondre plus facilement les voleurs.

Dans différents modes particuliers de réalisation, le procédé prévoit au moins une des étapes suivantes, après le passage en état volé du terminal:
- une étape d'effacement des données sensibles (zone de mémoire où sont stockées les informations liées aux cartes par exemple) ;
- une étape d'invalidation du terminal ;
- une étape de déclenchement d'une alarme (appel par téléphone (message vocal, SMS,...) de services de police ou alarme sonore...).

Suivant les modes de réalisation de l'invention, lesdites données de localisation peuvent être provenir de différents types d'émetteurs. Notamment, lesdites données de localisation peuvent comprendre des données d'identification d'une station de base d'un réseau de radiocommunication à laquelle ledit terminal est rattaché à un instant donné.

Il peut s'agir par exemple de l'identification de la base GSM la plus proche audit instant.

Par exemple, le terminal peut ainsi enregistrer périodiquement la localisation courante de la base GSM la plus proche et la date et/ou l'heure de cette localisation, permettant ainsi aux enquêteurs de découvrir à posteriori le parcours du terminal volé.

Cet enregistrement peut également être effectué lors de chaque détection d'un changement de cellule (« hand-over »).

Dans d'autres modes de réalisation, lesdites données de localisation peuvent comprendre des données de localisation provenant d'émetteurs d'autres types de radiocommunications. Par exemple, il peut s'agir de données de localisation provenant d'un émetteur de radiotéléphonie, comme un émetteur IS-41, d'une borne WIFI et/ou d'un émetteur FM délivrant des messages RDS, ou encore des signaux de localisation, par exemple de type GPS.

Le procédé peut également prévoir que certaines données de localisation proviennent d'un émetteur rattaché à une communauté de terminaux sans fil (autre que celle à laquelle appartenait le terminal), comme par exemple la base d'une autre parc de terminaux de paiement.

Dans ce cas particulier, on peut prévoir que cette base est apte à reconnaître la présence d'un terminal volé à proximité, et le cas échéant à émettre un signal d'alerte vers un tiers habilité.

Bien sûr, les types de sources des données de localisation peuvent être multiples, et varier au fil des acquisitions, en fonction du voisinage du terminal par exemple. On comprend que plus le nombre de « points de repère » obtenus est élevé, meilleure est la précision de la reconstruction du trajet.

Le procédé selon l'invention comprend également, selon les modes de réalisation, l'enregistrement d'au moins une donnée représentative du vol et/ou de son contexte dans une zone de mémoire sécurisée du terminal.

Le procédé peut ainsi mettre en oeuvre, dans ledit état volé, une étape de stockage dans une zone de mémoire sécurisée du terminal d'au moins une information relative à au moins une dernière transaction effectuée par ledit terminal avant ou lors de son passage à l'état volé.

Dans certains modes particuliers de réalisation, les éléments enregistrés dans la zone de mémoire sécurisée du terminal permettent notamment de caractériser l'instant où le vol a été détecté. Ils peuvent comprendre en particulier la date et/ou l'heure de la détection, la raison de la détection.

Ainsi, selon les modes de réalisation, le procédé peut également comprendre, dans ledit état volé, une étape de stockage dans une zone de mémoire sécurisée du terminal d'au moins une information relative à un horodatage du vol.

Dans certains modes particuliers de réalisation, le procédé prévoit, dans ledit état volé, une étape de stockage dans une zone de mémoire sécurisée du terminal d'au moins une information relative à la nature du vol.

Par exemple, au moins une desdites informations relatives à la nature du vol appartient au groupe comprenant :
- une identification du commerçant ;
- une adresse du commerçant ;
- un numéro de téléphone d'une personne à contacter ;
- un numéro de série d'une base maîtresse d'origine du terminal;
- une information d'identification du fabricant ou d'un gestionnaire dudit terminal.

Le procédé peut de plus mettre en oeuvre, dans ledit état volé, une étape de stockage dans une zone de mémoire sécurisée du terminal d'au moins une information relative à une action effectuée sur ledit terminal, à au moins instant différé après ladite détection.

Il peut s'agir en particulier d'une mémorisation de chaque manipulation effectuée sur le terminal, aidant ainsi à cerner les intentions des malfaiteurs.

Ainsi, l'invention propose une approche nouvelle et inventive de la lutte contre le vol et le recel des terminaux de paiement qui limite les possibilités de nuisance des malfaiteurs et aide également à porter remède au vol commis.

Certains modes particuliers de réalisation prévoient que le procédé comprend, dans ledit état volé, une étape d'émission périodique, transmettant vers un tiers de contrôle au moins une des informations mémorisées.

Suivant les modes de réalisation de l'invention, ce tiers de contrôle peut par exemple être un service de police, un organisme bancaire, le propriétaire ou un responsable du terminal.

Dans un mode préférentiel de réalisation de l'invention, le procédé comprend également une étape de restitution desdites données représentatives à un tiers, comprenant une sous-étape de contrôle d'une habilitation de ce dernier.

Cette restitution peut se faire localement (afficheur, synthèse vocale, impression, copie vers une clé USB) ou à distance, par téléchargement.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de traçabilité des terminaux électroniques en cas de vol décrit précédemment.

L'invention concerne encore un terminal adapté à mettre en oeuvre le procédé de l'invention. Un tel terminal comprend notamment :
- un moyen de détection d'une absence de contact avec une base et/ou un autre terminal associé audit terminal, pendant un laps de temps prédéterminé, générant un passage dudit terminal dans un état volé ;
- dans ledit état volé, un moyen de stockage dans une zone de mémoire sécurisée du terminal d'une série de données de localisation successives, associées chacune à une information d'horodatage, de façon à permettre une reconstruction d'un itinéraire suivi par ledit terminal.

Un terminal selon l'invention peut également comprendre :
- des moyens de définition (paramétrage) des données à stocker en cas de vol ;
- des moyens de détection du vol par absence de réponse de la base ou d'un autre terminal identifié ;
- un micro processeur rassemblant les informations à enregistrer ;
- une carte mémoire sécurisée de capacité suffisante pour l'enregistrement des éléments du contexte ;
- un moyen de transmission et/ou de restitution des données stockées.

Dans un mode particulier de réalisation de l'invention, le terminal comprend un moyen d'émission périodique, transmettant vers un tiers de contrôle au moins une des informations mémorisées.

L'invention concerne enfin une base d'un parc de terminaux de paiement qui comprend des moyens de détection de la présence d'un terminal de paiement étranger à son parc et des moyens d'émission vers ledit terminal étranger de données associées à sa propre localisation.

Une telle base peut également comprendre des moyens de réception desdites informations transmises par ledit terminal étranger, et des moyens d'émission vers ledit tiers desdites informations transmises par ledit terminal étranger.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique fonctionnel de l'invention dans un mode de réalisation ;
- la figure 2 illustre le fonctionnement dynamique de l'invention, basé sur le synoptique statique de la figure 1 ;
- la figure 3, basée sur le synoptique présenté sur la figure 1, illustre le fonctionnement dynamique de l'invention pour la restitution des données représentatives stockées ;
- la figure 4, basée sur le synoptique présenté sur la figure 1, illustre un type de données représentatives stockées selon l'invention.

### 6. Description d'un mode de réalisation de l'invention

### 6.1 Principe général

Le principe général de l'invention repose sur la mise en oeuvre d'un enregistrement de données représentatives d'un vol d'un terminal de paiement électronique, et en particulier du trajet suivi après le vol (au moins pendant une période initiale, si l'alimentation électrique vient à manquer) dans une zone de mémoire sécurisée du terminal, de façon à permettre une analyse des circonstances du vol (date et heure, lieu, propriétaire,...) et/ou une reconstruction de l'itinéraire suivi par le terminal (grâce à la mémorisation de données de localisation successives du terminal et à leur horodatage), si le terminal est ensuite retrouvé.

### 6.2 Description d'un mode de réalisation particulier

On considère par la suite un exemple de mise en oeuvre du procédé de l'invention appliqué à un terminal mobile de paiement, dans le but de faciliter la recherche de son propriétaire et d'aider à confondre le voleur si le terminal est volé puis retrouvé, par exemple par un service de police.

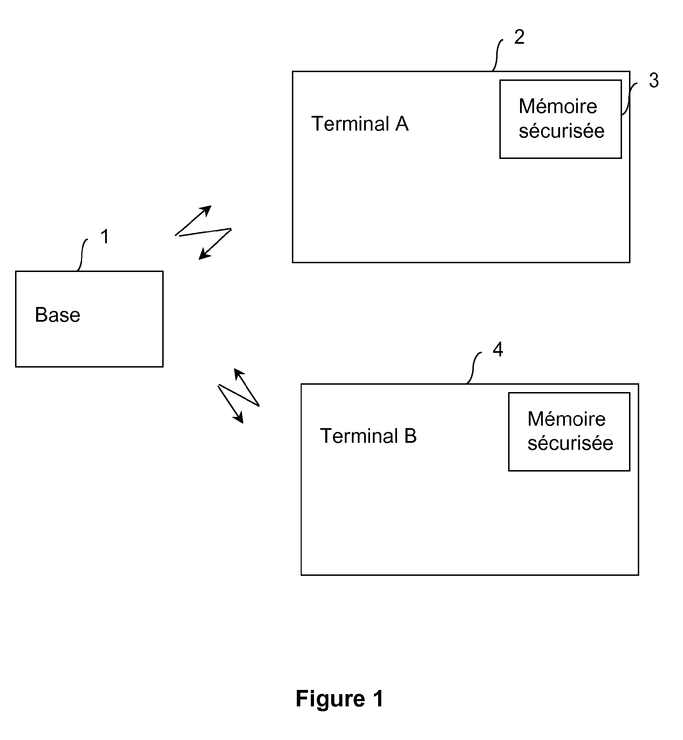

On présente, en relation avec la figure 1, un mode particulier de mise en oeuvre du procédé selon l'invention, implanté dans un terminal de paiement 2 faisant partie d'un parc de terminaux mobiles 2, 4, utilisés par exemple dans un restaurant, et déployés autour d'une base «maîtresse» 1.

Le terminal 2 comprend des moyens de dialogue avec la base 1 et éventuellement avec un autre terminal 4 du même parc. Le terminal 2 comprend également une unité centrale de traitement et de contrôle (microprocesseur) apte à lire des données, situées notamment dans une zone de mémoire volatile du terminal 2, et à stocker des données, notamment dans une zone de mémoire sécurisée 3 du terminal 2.

Dans ce mode particulier de réalisation, le microprocesseur du terminal 2 est également apte à effacer des données dans sa mémoire volatile et comprend aussi un transmetteur pour communication GSM. Il est de plus apte à générer une alarme (sonore ou téléphonique) pour signaler le vol. Ces caractéristiques sont optionnelles.

Enfin le terminal inclut un moyen de restitution des données représentatives préalablement stockées.

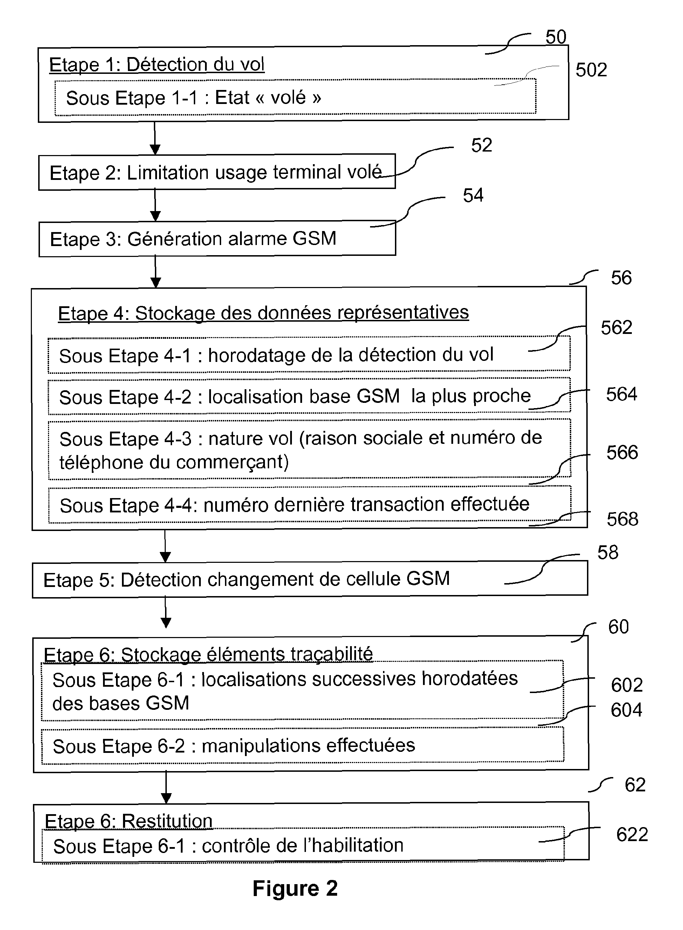

On présente maintenant, en relation avec la figure 2, les principales étapes du procédé pour l'un des terminaux, ici le terminal 2 (le parc des terminaux du restaurant pouvant être hétérogène, on ne fait aucune hypothèse sur la mise en oeuvre du procédé sur l'ensemble des terminaux du parc).

La première étape du procédé intervient par exemple lorsque le terminal 2 ne parvient plus à dialoguer avec sa base 1, ou avec un autre terminal 4 du parc, pendant un laps de temps prédéterminé. C'est l'étape de détection du vol 50, qui entraîne un passage à l'état volé du terminal.

Dans le mode particulier de réalisation décrit ici, le procédé prévoit ainsi une sous-étape de passage de l'état interne du terminal dans un état dit « état volé » 502.

Dans ce mode de réalisation, il est prévu une deuxième étape de limitation des possibilités d'usage du terminal volé 52 : effacement des données sensibles, comme celles contenant des données liées à des paiement déjà effectués par exemple, et déclenchement d'un mécanisme d'invalidation du terminal.

Une troisième étape de ce mode de réalisation est la génération d'une alarme, par exemple par GSM, vers les services de police ou similaire 54.

Le procédé comprend une quatrième étape de stockage de données représentatives du vol et de son contexte dans la mémoire sécurisée 56.

Cette étape 56 comprend elle-même plusieurs sous étapes en fonction des données à stocker. Dans ce mode particulier de réalisation, on distinguera les sous-étapes suivantes :
- une sous-étape de stockage de l'horodate de détection du vol 562,
- une sous-étape d'obtention et de stockage de la position de la base GSM la plus proche du terminal lors de la détection du vol 564,
- une sous-étape de stockage de données relatives à la nature du vol : identification du commerçant et numéro de téléphone d'une personne à contacter 566,
- une sous-étape de stockage du numéro de la dernière transaction effectuée à partir du terminal avant ou pendant la détection du vol 568. Dans certains modes de réalisation, cette dernière sous-étape peut également comprendre le stockage d'autres informations relatives à cette transaction, comme par exemple le montant de la transaction ou le numéro du compte à débiter et/ou à créditer.

L'ordre des étapes et des sous-étapes peut bien sûr être modifié.

On peut de plus prévoir que le titulaire autorisé dispose de la possibilité d'interrompre la procédure, par exemple en introduisant un code secret permettant de prouver que le terminal n'a pas été volé.

Lorsque l'état interne du terminal est passé comme volé, le fonctionnement du terminal 2 est alors particulier.

D'une part, le procédé prévoit une étape de détection 58 d'un déplacement, ou d'un mouvement, par exemple sous la forme d'un changement de cellule GSM ou d'un système cellulaire similaire (« hand-over ») et/ou d'acquisition périodique d'un identifiant de la station de base GSM la plus proche, tant que le terminal 2 dispose de suffisamment d'énergie.

D'autre part, il stocke des données relatives à l'historique du terminal après le vol 60. Par exemple, il stocke les localisations successives de la station GSM la plus proche 602, ainsi que la date et l'heure correspondantes, dans la mémoire sécurisée 3. En particulier, le terminal peut mémoriser, lors de chaque changement de cellule, la localisation de la nouvelle station de base et son horodate, afin de pouvoir retracer ultérieurement l'itinéraire du terminal.

Toute manipulation détectée sur le terminal 2 (insertion d'une carte de paiement par exemple) peut également être stockée 604 dans la mémoire sécurisée 3.

Si le terminal 2 est éteint puis rallumé, il peut recommencer aussitôt à enregistrer sa position GSM ainsi que les manipulations réalisées par l'utilisateur. On peut également prévoir que, même lorsqu'il est éteint, une portion du terminal reste alimentée pour permettre l'enregistrement des différentes informations dans le terminal, de façon discrète (c'est-à-dire non détectée par le voleur).

Il est enfin prévu une étape de restitution 62 des données représentatives stockées dans la mémoire sécurisée 3 du terminal 2 quand le terminal 2 est retrouvé par les services de police. Cette étape comprend une sous-étape de contrôle de l'habilitation 622.

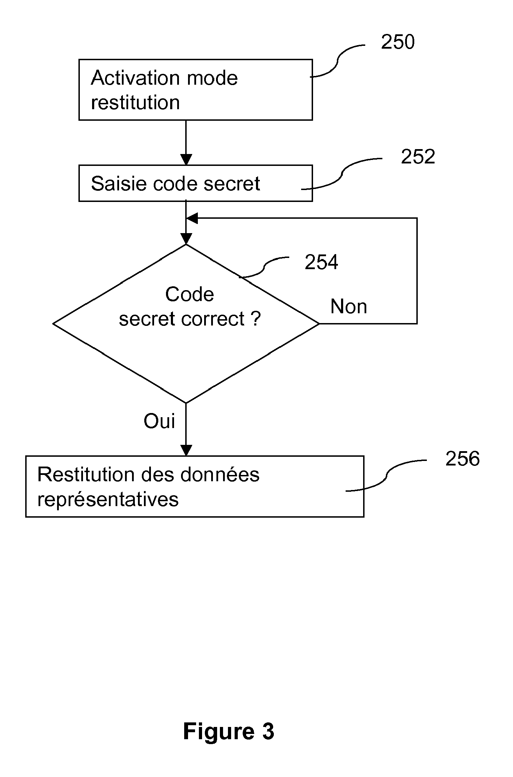

Dans le mode de réalisation illustré en figure 3, l'activation du mode « restitution » 250 suivi de la saisie d'un code secret 252 (fourni par une autorité habilitée), permet, si le code secret saisi est correct 254, d'obtenir la restitution 256 des informations stockées dans la mémoire sécurisée 3. Cette restitution peut se faire localement, par exemple par utilisation d'une clé USB par exemple, ou par le biais d'un afficheur, d'une synthèse vocale ou d'une impression. Elle peut aussi se faire à distance, par téléchargement.

Dans une variante du mode de réalisation décrit, le terminal peut émettre périodiquement certaines informations mémorisées. Par exemple, le procédé peut prévoir une émission de l'ensemble ou d'une partie des informations de localisation des bases GSM les plus proches enregistrées successivement et les dates et/ou heures de localisation correspondantes, vers un tiers de contrôle, comme par exemple un service de police ou une autre base de terminaux de paiement, afin d'aider de déterminer la localisation du terminal.

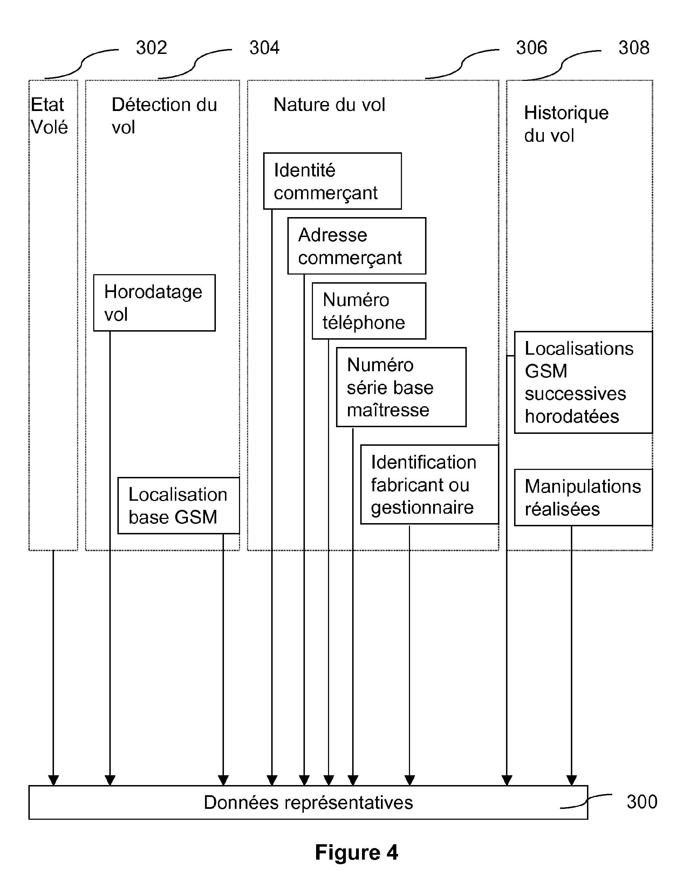

La figure 4 illustre un exemple de données représentatives 300 susceptibles d'être stockées selon le procédé de l'invention : l'état « volé » du terminal 302 (qui empêche la réutilisation du terminal), des données apportant des précisions sur la période de détection du vol 304 (date et/ou heure de la détection et/ou localisation de la base GSM la plus proche par exemple), des données relatives au contexte du vol 306 (identification du commerçant, adresse du commerçant, numéro de téléphone d'une personne à contacter, numéro de série de la base maîtresse d'origine du terminal, information d'identification du fabricant ou d'un gestionnaire du terminal par exemple), ou des données apportant des précisions sur l'historique du vol 308 (localisations successives de la station de base GSM la plus proche et dates et/ou heures de localisation correspondantes, ou identification des manipulations réalisées sur le terminal par exemple).

Dans un mode particulier de réalisation de cette variante de l'invention, la base maîtresse 1 du parc de terminaux est apte à recevoir des messages émis par un terminal similaire au terminal 2 mais étranger au parc de terminaux de paiement auquel sont rattachés la base et le terminal 2.

Quand elle reçoit un message émis par un tel terminal « étranger », la base fournit alors au terminal des données concernant sa propre localisation (ou un identifiant de cette base), afin qu'il puisse l'enregistrer. Cette base peut en outre émettre un message d'alerte indiquant qu'elle est en présence d'un terminal « étranger » vers un tiers de contrôle destinataire. Ce message d'alerte peut comprendre tout ou partie des données stockées par le terminal volé. Il peut s'agir en particulier d'un message par voie téléphonique, par SMS, e-mail, etc vers le tiers de contrôle ou d'un autre tiers habilité, comme par exemple un service de contrôle bancaire, le propriétaire du parc de terminaux ou les services de police.

## Revendications

1. Procédé de traçabilité d'un terminal de paiement électronique, en cas de vol de ce dernier, **caractérisé en ce qu'**il comprend les étapes suivantes :
- détection d'une absence de contact avec une base et/ou un autre terminal associé audit terminal, pendant un laps de temps prédéterminé, générant un passage dudit terminal dans un état volé ;
- dans ledit état volé, stockage dans une zone de mémoire sécurisée du terminal d'une série de données de localisation successives, associées chacune à une information d'horodatage, de façon à permettre une reconstruction d'un itinéraire suivi par ledit terminal.

2. Procédé de traçabilité selon la revendication 1, **caractérisé en ce que** lesdites données de localisation comprennent des données d'identification d'une station de base d'un réseau de radiocommunication à laquelle ledit terminal est rattaché à un instant donné.

3. Procédé de traçabilité selon l'une quelconque des revendications 1 et 2, **caractérisé en ce qu'**il comprend, dans ledit état volé, une étape de stockage dans une zone de mémoire sécurisée du terminal d'au moins une information relative à au moins une dernière transaction effectuée par ledit terminal avant ou lors de son passage à l'état volé.

4. Procédé de traçabilité selon l'une quelconque des revendications 1 à 3, **caractérisé en ce qu'**il comprend, dans ledit état volé, une étape de stockage dans une zone de mémoire sécurisée du terminal d'au moins une information relative à un horodatage du vol.

5. Procédé de traçabilité selon l'une quelconque des revendications 1 à 4, **caractérisé en ce qu'**il comprend, dans ledit état volé, une étape de stockage dans une zone de mémoire sécurisée du terminal d'au moins une information relative à la nature du vol.

6. Procédé de traçabilité selon la revendication 5, **caractérisé en ce qu'**au moins une desdites informations relatives à la nature du vol appartient au groupe comprenant :
- une identification du commerçant ;
- une adresse du commerçant ;
- un numéro de téléphone d'une personne à contacter ;
- un numéro de série d'une base maîtresse d'origine du terminal;
- une information d'identification du fabricant ou d'un gestionnaire dudit terminal.

7. Procédé de traçabilité selon l'une quelconque des revendications 1 à 6, **caractérisé en ce qu'**il comprend, dans ledit état volé, une étape de stockage dans une zone de mémoire sécurisée du terminal d'au moins une information relative à une action effectuée sur ledit terminal, à au moins instant différé après ladite détection.

8. Procédé de traçabilité selon l'une quelconque des revendications 1 à 7, **caractérisé en ce qu'**il comprend, dans ledit état volé, une étape d'émission périodique, transmettant vers un tiers de contrôle au moins une des informations mémorisées.

9. Procédé de traçabilité selon l'une quelconque des revendications 1 à 8, **caractérisé en ce qu'**il comprend une étape de restitution desdites données représentatives à un tiers, comprenant une sous-étape de contrôle d'une habilitation de ce dernier.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de protection contre le vol selon l'une au moins des revendications 1 à 9.

11. Terminal de paiement **caractérisé en ce qu'**il comprend :
- un moyen de détection d'une absence de contact avec une base et/ou un autre terminal associé audit terminal, pendant un laps de temps prédéterminé, générant un passage dudit terminal dans un état volé ;
- dans ledit état volé, un moyen de stockage dans une zone de mémoire sécurisée du terminal d'une série de données de localisation successives, associées chacune à une information d'horodatage, de façon à permettre une reconstruction d'un itinéraire suivi par ledit terminal.

12. Terminal de paiement selon la revendication 11 **caractérisé en ce qu'**il comprend un moyen d'émission périodique, transmettant vers un tiers de contrôle au moins une des informations mémorisées.

13. Base d'un parc de terminaux de paiement **caractérisée en ce qu'**elle comprend des moyens de détection de la présence d'un terminal de paiement selon la revendication 12 et étranger à son parc et des moyens d'émission vers ledit terminal étranger de données associées à sa propre localisation.

14. Base selon la revendication 13, **caractérisé en ce qu'**elle comprend des moyens de réception desdites informations transmises par ledit terminal étranger, et des moyens d'émission vers ledit tiers desdites informations transmises par ledit terminal étranger.
